# EUROPÄISCHE PATENTANMELDUNG

(11) **EP 4 624 381 A1**
(43) Veröffentlichungstag der Anmeldung: **01.10.2025**
(21) Anmeldenummer: 25166979.2
(22) Anmeldetag: 28.03.2025
(51) Int. Cl.: B65G 39/073, B65G 45/18

(54) **GURTROLLENREIFEN FÜR EINE GURTBANDROLLE EINES GURTBANDFÖRDERSYTEMS, GURTBANDROLLE UND VERWENDUNG EINER SOLCHEN GURTBANDROLLE**

(30) Priorität: 28.03.2024 DE 102024108987
(71) Anmelder: Bauer, Detlef, 63820 Elsenfeld (DE)
(72) Erfinder: Bauer, Detlef, 63820 Elsenfeld (DE)
(74) Vertreter: Adares PartGmbB

(57) **Zusammenfassung**

Die Erfindung betrifft einen Gurtrollenreifen (1) für eine Gurtbandrolle eines Gurtbandfördersystems aufweisend einen Reifengrundkörper (10), der auf einem um eine Gurtrollendrehachse (A) rotierbaren Rollenkörper fixierbar ist, und eine Vielzahl tangential voneinander beabstandeter Konturrippen (11) mit einer Rippenhöhe (1113) und mit von der Gurtrollendrehachse (A) distalen Rippenkanten (111), wobei der Gurtrollenreifen bei einer Rotation um die Gurtrollendrehachse (A) mit den Rippenkanten (111) eine Außenkontur des Gurtrollenreifens (1) beschreibt, wobei mindestens eine der Konturrippen (111) entlang der Gurtrollendrehachse (A) betrachtet eine axiale Ausdehnung aufweist, die kleiner ist als die doppelte Rippenhöhe (1113), und/oder entlang der Gurtrollendrehachse (A) betrachtet mindestens eine der Konturrippen (111) nach einer axialen Ausdehnung von weniger als der doppelten Rippenhöhe (1113) eine strukturelle Unterbrechung in Form eines sich zur Gurtrollendrehachse (A) hin erstreckenden Spaltes mit einer Spalttiefe von mindestens der Hälfte der im Bereich des Spaltes auftretenden Rippenhöhe (1113) aufweist. Der Reifengrundkörper (10) und die Konturrippen (11) ist als einstückiges Gussteil aus einem Polymermaterial mit einer Shore-Härte im Bereich von 25 A bis 55 D ausgebildet ist. Weiterhin betrifft die Erfindung eine Gurtbandrolle mit mindestens einem solchen Gurtrollenreifen und die Verwendung einer solchen Gurtbandrolle in einem Gurtbandfördersystem.

## Beschreibung

Die Erfindung betrifft einen Gurtrollenreifen für eine Gurtbandrolle eines Gurtbandfördersystems, eine Gurtbandrolle aufweisend einen oder mehrere solcher Gurtbandrollen und eine Verwendung einer solchen Gurtbandrolle.

Gurtbandfördersysteme sind seit Langem im Einsatz und für den wirtschaftlichen und automatisierten Transport unabkömmlich. Insbesondere bei der Förderung mineralischer Schüttgüter, wie zum Beispiel, Sand, Kies, Schotter, Erz, Kohle etc. spielt der Verschleißschutz für solche Gurtbandfördersysteme vor dem Hintergrund immer stärker gebotener Wirtschaftlichkeit und Nachhaltigkeit bei der Schüttgutförderung eine wichtige Rolle. Regelmäßig bleiben Reste der geförderten, oftmals feuchten Schüttgüter am Gurtband anhaften, nachdem das Gurtband die Abwurfstation des Gurtbandfördersystems passiert hat und im so genannten Untergurtbereich in Richtung der Aufgabestation zurückgeführt wird. Diese Anhaftungen sind unerwünscht. Diese können auf dem Gurtband mit jedem Umlauf des Gurtbandes schichtartig weiter anwachsen und auf diese Weise insbesondere den Volumendurchsatz des geförderten Schüttgutes herabsetzen. Außerdem fallen diese Anhaftungen oft in Bereichen des Gurtbandfördersystems vom Gurtband, wo diese zu Schäden führen oder zumindest zusätzliche, meist manuell durchzuführende, Reinigungsmaßnahmen erfordern.

### Aus dem Stand der Technik sind viele Gurtbandrollen für

Gurtbandfördersysteme bekannt, wobei diese Gurtbandrollen speziell ausgebildet sind, um unerwünschte Anhaftungen von Schüttgut vom Gurtband zu entfernen. Solche Gurtbandrollen sind aufgebaut aus einem um eine Gurtrollendrehachse rotierbaren Rollenkörper und aus einem oder einer Mehrzahl auf diesem Rollenkörper befestigter Gurtrollenreifen.

Die DE2639873 beschreibt eine Gurtbandrolle mit einem Gurtrollenreifen, der Gurtrollenreifen aufweisend einen Reifengrundkörper, der auf einem um eine Gurtrollendrehachse rotierbaren Rollenkörper fixierbar ist, und eine Vielzahl tangential voneinander beabstandeter Konturrippen mit einer Rippenhöhe und mit von der Gurtrollendrehachse distalen Rippenkanten, die aus einem Polymermaterial gebildet sind. Der Gurtrollenreifen beschreibt bei einer Rotation um die Gurtrollendrehachse mit den Rippenkanten eine Außenkontur des Gurtrollenreifens.

Die Rippenhöhe ist dabei definiert als der Niveau-Unterschied zwischen der Rippenkante und dem unteren Scheitelpunkt zwischen zwei benachbarten Konturrippen. Dabei muss die Konturrippe keine lotrecht ausgebildeten Rippenflanken aufweisen. Die Konturrippen können beispielsweise eine sich im Querschnitt nach oben hin konisch verjüngende Geometrie aufweisen. Im Querschnitt betrachtet gibt es zwischen benachbarten Konturrippen einen unteren Scheitelpunkt. Die von der Rippenkante auf das Niveau des Scheitelpunktes verlaufende Linie stellt in diesem Fall die Rippenhöhe dar. Die Rippenhöhe kann davon abhängen, wo in axialer Richtung entlang der Gurtrollendrehachse der Querschnitt betrachtet wird. Der Gurtrollenreifen gemäß DE2639873 weist eine in axialer Richtung von einem Ende des Gurtrollenreifens zur Mitte der Gurtbandrolle hin abnehmende und dann zum anderen Ende der Gurtbandrolle wieder zunehmende Rippenhöhe auf.

Dieser Gurtrollenreifen bewirkt ein Abstreifen von Anhaftungen am Gurtband mittels seiner parallel zueinander ausgebildeten Rippenkanten. Die Bestandteile der Anhaftungen gelangen dann in die Bereiche zwischen zwei benachbarten Rippenkanten und werden über dort befindliche schiefe Ebenen, die sich zu den jeweiligen Enden des Gurtrollenreifens neigen, nach außen hin wegtransportiert. Zwischen den parallel zueinander über die gesamte Gurtrollenreifenbreite verlaufenden Rippen können sich beim Betrieb jedoch ebenfalls Anhaftungen dauerhaft festsetzen

Aus der US 5,109,976 ist ein Gurtrollenreifen für ein Schüttgut-Abstreifsystem bekannt, bei dem in axialer Richtung die Konturrippen mit ihren Rippenkanten segmentweise ausgebildet sind. Jedes der aus Gummi aufgebauten Segmente, lässt sich mit einem Fixierabschnitt an einer Gurtrollendrehachse festklemmen. Diese Segmente sind in axialer Richtung durch zwei radiale Schlitze in insgesamt drei Abschnitte aufgeteilt. Im Bereich der Rippenkanten sind zusätzlich Keramikplättchen angebracht, um den Verschleißschutz der Rippenkanten zu erhöhen. Die strukturelle Unterbrechung der Konturrippen in Form sich zur Gurtrollendrehachse hin erstreckender Spalte mit einer Spalttiefe von mindestens der Hälfte der im Bereich des Spaltes auftretenden Rippenhöhe setzt die mechanische Steifheit der Konturrippen in tangentialer Richtung herab. Das heißt Anhaftungen, die in Bereichen zwischen benachbarten Konturrippen gelangen, werden sich nur temporär festsetzen und sich mit hoher Wahrscheinlichkeit wieder lösen. Dies liegt darin begründet, dass bei der Rotation des Gurtrollenreifens die Kombination von Zentrifugalkräften mit der mechanischen, tangential ausgerichteten Wechselwirkung zwischen Gurtrollenreifen und Gurtband über die vergleichsweise flexiblen und damit auslenkbaren und stauchbaren Konturrippen dazu führt, dass die Konturrippen stetig relativ zueinander bewegt werden. Zwischen den derart bewegten Konturrippen anhaftende Schüttgutreste werden auf diese Weise aus dem Gurtrollenreifen entfernt.

Aufgabe der vorliegenden Erfindung ist es, einen solchen Gurtrollenreifen für eine Gurtbandrolle eines Gurtbandfördersystems bereitzustellen, der deutlich einfacher aufgebaut und somit kostengünstiger herstellbar ist und noch weiter verbesserte Eigenschaften hinsichtlich der Entfernung von Schüttgut-Anhaftungen vom Gurtband und aus dem Gurtreifen selbst aufweist.

Diese Aufgabe wird durch einen Gurtrollenreifen mit den Merkmalen des Anspruchs 1, durch eine Gurtbandrolle gemäß Anspruch 8 und durch eine Verwendung einer solchen Gurtbandrolle gemäß Anspruch 10 gelöst.

Erfindungsgemäß ist für den Gurtrollenreifen vorgesehen, dass der Reifengrundkörper und die Konturrippen als einstückiges Gussteil aus einem Polymermaterial mit einer Shore-Härte im Bereich von 25 A bis 55 D ausgebildet ist.

Dies ermögliche eine besonders kostengünstige, weil gut automatisierbare Herstellung des Gurtrollenreifens, der damit als Verschleißteil eines Gurtbandfördersystems besonders einfach austauschbar ist. Aufwändige mechanische Fixiersysteme für die Konturrippen an der Drehachse entfallen, weil sich der Gurtreifen mit seinem Reifengrundkörper einfach auf ein Drehachsenelement aufschieben lässt.

Der Aufbau des Reifengrundkörpers und der Konturrippen als einstückiges Gussteil aus einem Polymermaterial schließt nicht aus, dass in dem Polymermaterial Verstärkungselemente aus Metall oder anderen Werkstoffen eingebettet sind. Diese Bauelemente dienen mechanisch als Bewehrung des Polymermaterials und bewirken eine im Einzelfall gewünschte erhöhte mechanische Belastbarkeit bei einer erhöhten Standzeit dieses Verschleißteils.

Als axiale Ausdehnung der Konturrippen im Sinne der vorliegenden Erfindung gilt, unabhängig von abschnittsweise geschwungen geführten Bereichen der Konturrippe, in der Aufsicht senkrecht zur Gurtrollendrehachse der zwischen Anfang und Ende der Konturrippe parallel zur Gurtrollendrehachse gemessene Abstand. Als Rippenhöhe gilt der Abstand von einem Scheitelpunkt zwischen benachbarten Konturrippen radial von der Gurtrollendrehachse gemessen bis auf das Niveau der entsprechenden Rippenkanten. Sind die Rippenhöhen benachbarter Konturrippen unterschiedlich oder ändert sich die Rippenhöhe einer Konturrippe in axialer Richtung, so gilt als Rippenhöhe im Sinne der Erfindung der gemittelte Messwert.

Eine bevorzugte Ausführungsform des Gurtrollenreifens sieht vor, dass die Rippenkanten zumindest entlang der Hälfte ihrer axialen Ausdehnung einen Abstand voneinander aufweisen, der mindestens das 0,5 bis 2,5fache der Rippenhöhe beträgt. Auf diese Weise bilden sich zwischen benachbarten Rippenkanten Kavitäten aus, die am Gurtband anhaftende Schüttgutreste in sich aufnehmen und somit vom Gurtband entfernen können. Die Rippenkanten weisen abhängig von der Beschaffenheit des Schüttguts eine Stärke von zwei bis zehn Millimetern auf. Abhängig von der Stärke wird die Rippenhöhe und die axiale Ausdehnung der Rippenkanten so gewählt, dass die resultierenden Abschnitte der Rippenkanten die gewünschte mechanische Flexibilität samt damit einhergehender Rückstellkräfte aufweisen.

Mit Vorteil weisen entlang der Gurtrollendrehachse betrachtet eine Mehrzahl der Konturrippen mit ihren Rippenkanten einen geschwungenen Verlauf auf. Dadurch werden Eckbereiche vermieden, in denen sich Schüttgutreste dauerhaft im Gurtrollenreifen festsetzen können.

Alle vorangehend beschriebenen Varianten sind vorteilhafterweise so weitergebildet, dass sich die Rippenkanten entlang der Gurtrollendrehachse betrachtet in mindestens zwei unterschiedlich zueinander verlaufenden Rippenkantenabschnitten erstrecken. Bevorzugt gehen diese in einem geschwungenen Verlauf ineinander über.

Bevorzugt sind die Rippenkanten des Gurtrollenreifens derart ausgebildet, dass der Gurtrollenreifen bei einer Rotation um die Gurtrollendrehachse mit den Rippenkanten die Außenkontur in Form eines Zylinders beschreibt. Dies ist bei flach ausgeführten Gurtbändern von Vorteil, um auf der Oberfläche des Gurtbandes gleichmäßig aufzuliegen. Wenn das Gurtband des Gurtbandfördersystems im Querschnitt betrachtet nicht flach ausgebildet sein sollte, so lässt sich der Gurtrollenreifen mit seiner Außenkontur entsprechend anpassen.

Bevorzugt laufen tangential benachbarte Rippenkanten in der einen axialen Richtung betrachtet zumindest abschnittsweise aufeinander zu und in der Gegenrichtung betrachtet zumindest abschnittsweise voneinander weg. Entlang des Umfangs des Gurtrollenreifens betrachtet kann sich diese Geometrie, insbesondere periodisch, wiederholen, so dass in axialer Richtung betrachtet benachbarte Rippenkanten abwechselnd aufeinander zu verlaufen und voneinander weg verlaufen.

Die der Erfindung zu Grunde liegende Aufgabe wird auch gelöst durch eine Gurtbandrolle mit einem um eine Gurtrollendrehachse rotierbaren Rollenkörper, auf dem ein Gurtrollenreifen oder in axialer Richtung entlang der Gurtrollendrehachse benachbart eine Mehrzahl von Gurtrollenreifen gemäß einer der vorangehend beschriebenen Varianten fixiert ist. Der modulare Aufbau aus mehreren axial nebeneinander aufgereihten Gurtrollenreifen hat mehrere Vorteile. Zum einen können unterschiedlich stark verschlissene Gurtrollenreifen jeweils dann ausgetauscht werden, wenn dies für den jeweiligen Gurtrollenreifen angezeigt ist. Wenn die Gurtrollenreifen mit ihrem Reifengrundkörper auf einem zylindrischen Rollenkörper durch Haftreibung fixiert sind, können im Betrieb der Gurtbandrolle beim Auftreten starker Tangentialkräfte zwischen dem mit Schüttgut verschmutzten Gurtband und den Gurtrollenreifen diejenigen Gurtrollenreifen, auf die besonders hohe Tangentialkräfte wirken, die den Gurtrollenreifen zu schädigen drohen, diese auf sie einwirkenden Tangentialkräfte herabsetzen, indem sie temporär relativ zum Rollenkörper der Gurtbandrolle rotieren. Dies erhöht die Lebensdauer des jeweiligen Gurtrollenreifens und lässt diesen weniger schnell verschleißen.

Bevorzugt ist die Gurtbandrolle derart ausgebildet, dass der Rollenkörper mit einer motorischen Antriebsvorrichtung gekoppelt ist. Dies erlaubt, die Gurtbandrolle entweder aktiv zum Antrieb eines Gurtbandes oder als angetriebenen Untergurtabstreifer einzusetzen, der beispielsweise gegenläufig zur Gurtbandlaufrichtung des Gurtbandes rotiert.

Die der Erfindung zu Grunde liegende Aufgabe wird auch gelöst durch die Verwendung einer Gurtbandrolle gemäß einem der vorangehend beschriebenen Varianten, so dass die Gurtbandrolle in einem Gurtbandfördersystem als passiv vom Gurtband mitgedrehter Untergurtabstreifer oder als aktiv entgegen einer Gurtbandlaufrichtung rotierend angetriebener Untergurtabstreifer eingesetzt wird. Die Konturrippen nehmen dabei mit ihren Zwischenräumen die am Gurtband befindlichen Anhaftungen auf. Da die Konturrippen relativ zueinander hinreichend mechanisch flexibel sind, werden die aufgenommenen Anhaftungen zuverlässig durch die Rotation der Gurtbandrolle wieder aus dieser herausgeschleudert. Alternativ kann die Gurtbandrolle in einem Gurtbandfördersystem auch als aktive oder als passive Gurtbandrolle im Bereich der Aufgabestation oder der Abwurfstation oder dazwischen als Stütz-, Umlenk- oder Antriebsrolle zum Einsatz kommen.

Weiter Merkmale und Eigenschaften des Gurtrollenreifens und einer damit ausgestatteter Gurtbandrolle für ein Gurtbandfördersystem werden im Zusammenhang mit den nachfolgend beschriebenen beispielhaften Ausführungsformen näher erläutert.

Es zeigt:
- Figur 1: eine Perspektivansicht einer ersten Ausführungsform des Gurtrollenreifens;
- Figur 2: eine Aufsicht auf den Gurtrollenreifen aus Figur 1;
- Figur 3: eine Seitenansicht auf den Gurtrollenreifen aus Figur 1;
- Figur 4: eine Perspektivansicht einer zweiten Ausführungsform des Gurtrollenreifens;
- Figur 5: eine Aufsicht auf den Gurtrollenreifen aus Figur 4;
- Figur 6: eine Seitenansicht auf den Gurtrollenreifen aus Figur 4;
- Figur 7: eine Aufsicht auf eine Gurtbandrolle mit einer Mehrzahl von Gurtrollenreifen gemäß der zweiten Ausführungsform aus den Figuren 4 bis 6;
- Figur 8: die Gurtbandrolle aus Figur 7 in einer perspektivischen Ansicht mit motorischem Antrieb für die Gurtbandrolle und
- Figur 9: eine schematische Ansicht eines Gurtbandfördersystems mit einer als Untergurtabstreifer eingesetzten Gurtbandrolle gemäß der in Figur 7 dargestellten Ausführungsform.

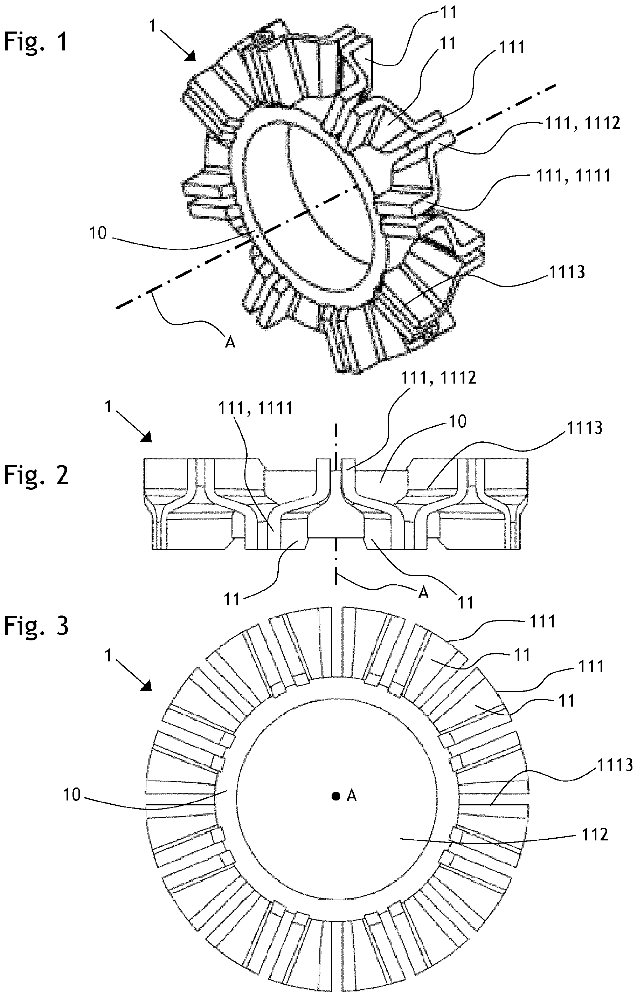

Figur 1 zeigt eine Perspektivansicht einer ersten Ausführungsform des Gurtrollenreifens 1. Auf einem ringförmigen Reifengrundkörper 10, durch dessen Mittelpunkt eine Gurtrollendrehachse A verläuft, ist eine Vielzahl voneinander beanstandeter Konturrippen 11 angeordnet, die sich mit einer Rippenhöhe 1113 im Wesentlichen radial zur Gurtrollendrehachse A vom ringförmigen Reifengrundkörper 10 nach außen hin wegerstrecken und jeweils mit Rippenkanten 111 abschließen. Jede Konturrippe 11 weist in axialer Richtung betrachtet einen geschwungenen Verlauf auf, der von einem ersten Rippenkantenabschnitt 1111 in einen zweiten Rippenkantenabschnitt 1112 übergeht. Zueinander benachbarte Konturrippen 11 sind dabei jeweils spiegelsymmetrisch zueinander ausgebildet, so dass sich in tangentialer Richtung die durch die Konturrippen 11 gebildete äußere Struktur des Gurtrollenreifens wiederholt. Der Übersichtlichkeit halber sind nicht alle Konturrippen 11 mit den entsprechenden Bezugszeichen für die Rippenkanten 111, die Rippenhöhe 1113 und die Rippenkantenabschnitte 1111, 1112 versehen.

Die sich periodisch wiederholende spiegelsymmetrische Struktur der Konturrippen 111 ist in Figur 2 in einer Aufsicht auf den Gurtrollenreifen 1 aus Figur 1 gut zu erkennen. Gleiche Bauelemente sind mit gleichen Bezugszeichen versehen.

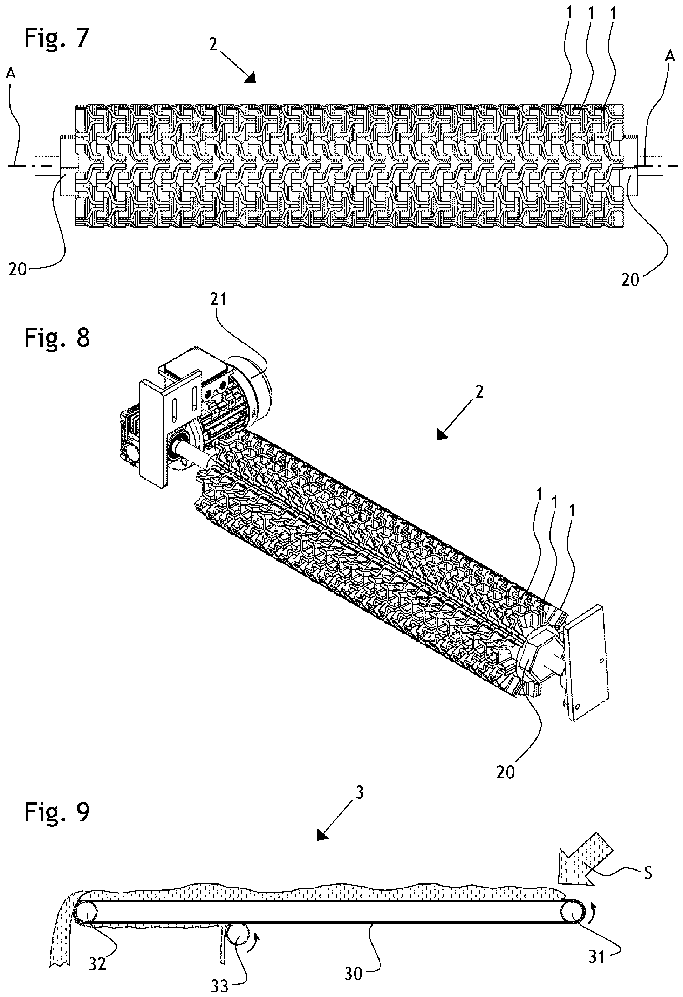

Figur 3 zeigt schließlich eine Seitenansicht auf den Gurtrollenreifen 1 aus den Figuren 1 und 2 in Richtung der Gurtrollendrehachse A. Gleiche Bauelemente sind wiederum mit gleichen Bezugszeichen versehen und der Übersichtlichkeit halber ist nicht jede der Konturrippen 11 mit den übrigen, sich periodisch wiederholenden Bezugszeichen versehen. Der ringförmige Reifengrundkörper 10 hat eine kreisförmige Mittelöffnung 112, die sich auf einen passend dazu dimensionierten rotierbaren Rollenkörper 20 einer Gurtbandrolle 2 aufschieben lässt. Dies ist in den Figuren 7 und 8 gezeigt. Der Gurtreifen 1 ist bevorzugt einstückig aus einem Polymermaterial mit einer Shore-Härte im Bereich 25 A bis 55 D ausgebildet. Dadurch erhält das gesamte Bauelement einen gewissen Grad an Elastizität. Wenn der Durchmesser des rotierbaren Rollenkörpers 20 derart größer dimensioniert ist als der Innendurchmesser der Mittelöffnung 112 des Gurtreifens 1, dass sich der Gurtreifen 1 durch elastische Ausdehnung auf den rotierbaren Rollenkörper aufschieben lässt, so wird der Gurtreifen 1 über Haftreibung auf dem rotierbaren Rollenkörper 20 in Position gehalten. Wenn bei der Wechselwirkung eines Gurtbandes mit den Rippenkanten 111 des Gurtreifens 1 die Haftreibungskraft zeitweise überschritten wird, kann der Gurtreifen 1 auf dem rotierbaren Rollenkörper 20 der Gurtbandrolle 2 durch eine Relativbewegung schlüpfen. Dies kann bei bestimmten Einsatzszenarien gewünscht sein, um die mechanische Belastung der Konturrippen 11 und des Reifengrundkörpers 10 zu beschränken.

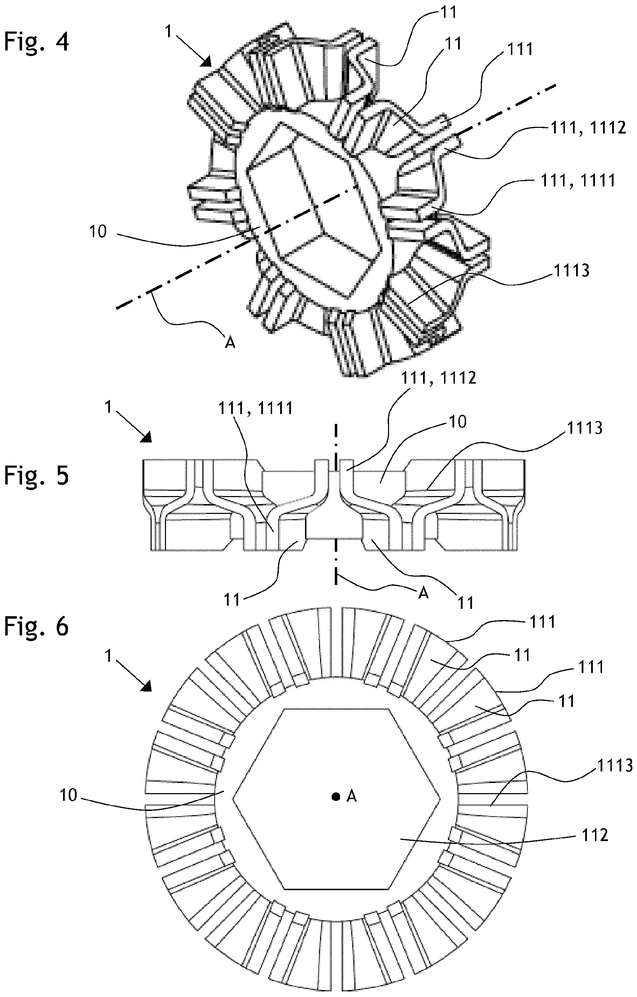

Wenn eine solche Schlupfbewegung zwischen Gurtreifen 1 und rotierbarem Rollenkörper 20 der Gurtbandrolle 2 nicht gewünscht ist, bietet es sich an, die Mittelöffnung 112 und den rotierbaren Rollenkörper 20 hinsichtlich ihrer Querschnitte derart auszubilden, dass eine relative Rotation zwischen beiden Bauteilen nicht möglich ist. Eine solche zweite Ausführungsform des Gurtreifens 1 ist in den Figuren 4 bis 6 dargestellt.

Figur 4 zeigt eine Perspektivansicht dieser zweiten Ausführungsform des Gurtrollenreifens 1, Figur 5 zeigt eine Aufsicht auf den Gurtrollenreifen 1 aus Figur 4 und Figur 6 zeigt eine Seitenansicht auf den Gurtrollenreifen 1 aus Figur 4. Dieser Gurtrollenreifen 1 entspricht hinsichtlich des Aufbaus der Konturrippen 11 genau dem der in den Figuren 1 bis 3 beschriebenen, ersten Ausführungsform. Gleiche Bezugszeichen sind für gleiche Bauelemente verwendet worden und die vorangehend gemachten Ausführungen gelten daher entsprechend.

Der einzige Unterschied zwischen den beiden Ausführungsformen des Gurtreifens 1 besteht in der im Querschnitt nicht kreisrund, sondern hexagonal ausgebildeten Mittelöffnung 112, die sich auf einem rotierbaren Rollenkörper 20 mit entsprechend hexagonalem Querschnitt aufsetzen lässt. Dies ist in den nachfolgend erläuterten Figuren 7 und 8 dargestellt.

Figur 7 zeigt eine Aufsicht auf eine Gurtbandrolle 2 mit einer Mehrzahl von Gurtrollenreifen 1 gemäß der in den Figuren 4 bis 6 gezeigten zweiten Ausführungsform mit der im Querschnitt hexagonal ausgebildeten Mittelöffnung 112. Die über zwanzig Gurtrollenreifen 1 sind axial benachbart auf den rotierbaren Rollenkörper 20 aufgesetzt. Es könnten auch deutlich weniger als zwanzig Gurtrollenreifen 1 sein, wenn entlang der axialen Ausdehnung der Konturrippen 11 genügend strukturelle Unterbrechungen in Form von Spalten vorgesehen wären, die sich von den Rippenkanten 111 in Richtung der Gurtrollendrehachse A erstrecken. Die Tiefe der Spalten beträgt dabei mindestens die Hälfte der im Bereich des Spaltes bestehenden Rippenhöhe 1113. Der strukturelle Effekt des Spaltes wird bei der in den Figuren gezeigten Ausführungsform des Gurtrollenreifens 1 alternativ durch dessen im Vergleich zur Rippenhöhe kurze Ausdehnung in axialer Richtung erzielt. Die Konturrippen weisen dazu entlang der Gurtrollendrehachse betrachtet eine axiale Ausdehnung auf, die kleiner ist als die doppelte Rippenhöhe.

Figur 8 zeigt die Gurtbandrolle 2 aus Figur 7 in einer perspektivischen Ansicht mit motorischem Antrieb 21 für die Gurtbandrolle 2. Gleiche Bauelemente sind mit den entsprechenden Bezugszeichen versehen.

Die beschriebene Gurtbandrolle 2 mit ihrer Vielzahl an Gurtrollenreifen 1 kommt bevorzugt als Untergurtabstreifer eines Gurtbandfördersystems 3 zum Einsatz. Figur 9 zeigt eine schematische Ansicht eines solchen Gurtbandfördersystems 3 mit einer Untergurtabstreifer-Gurtbandrolle 33 gemäß der in Figur 7 dargestellten Ausführungsform. Das Gurtbandfördersystem 3 weist eine Aufgabestation-Gurtbandrolle 31 und eine Abwurfstation-Gurtbandrolle 32 auf. Zwischen Aufgabestation und Abwurfstation wird ein Gurtband 30 durch die Aufgabestation-Gurtbandrolle 31 und/oder durch die Abwurfstation-Gurtbandrolle 32 angetrieben. An der Aufgabestation wird das Gurtband 30 mit Schüttgut S beschickt, an der Abwurfstation fällt fast das gesamte Schüttgut S vom Gurtband 30 herunter. Hinter der Abwurfstation verbleiben jedoch regelmäßig Reste des Schüttguts S und/oder Verunreinigungen am Gurtband 30 haften. Um diese unerwünschten Reste und/oder Verunreinigungen vollständig oder zumindest signifikant zu entfernen kommt in Gurtbandfördersystemen ein so genannter Untergurtabstreifer zum Einsatz. Beim vorliegend beschriebenen Gurtbandfördersystem 3 kommt zu diesem Zweck die Untergurtabstreifer-Gurtbandrolle 33 zum Einsatz. Diese kann entweder passiv mitdrehend durch mechanischen Kontakt zum Gurtband 30 mitrotiert werden. In den meisten Szenarien wird jedoch ein aktiver Rotations-Antrieb der Untergurtabstreifer-Gurtbandrolle 33 entgegen der Laufrichtung des Gurtbands 30 mittels der in Figur 8 gezeigten motorischen Antriebsvorrichtung 21 zu einem besseren Ergebnis beim Entfernen der unerwünschten Schüttgutreste und/oder Verunreinigungen führen.

Die erfindungsgemäßen Gurtbandrollen 2 können alternativ zum Einsatz als Untergurtabstreifer-Gurtbandrolle 33 auch als aktive oder passive Gurtbandrollen im Bereich der Aufgabestation oder der Abwurfstation oder dazwischen als Umlenk-, Antriebs- oder Stützrollen für das Gurtband 30 zum Einsatz kommen.

### Bezugszeichenliste:

- 1: Gurtrollenreifen
- 10: Reifengrundkörper
- 11: Konturrippen
- 111: Rippenkanten
- 1111: Rippenkantenabschnitt
- 1112: Rippenkantenabschnitt
- 1113: Rippenhöhe
- 112: Mittelöffnung

- 2: Gurtbandrolle
- 20: rotierbarer Rollenkörper
- 21: Antriebsvorrichtung

- 3: Gurtbandfördersystem
- 30: Gurtband
- 31: Aufgabestation-Gurtbandrolle
- 32: Abwurfstation-Gurtbandrolle
- 33: Untergurtabstreifer-Gurtbandrolle

- A: Gurtrollendrehachse
- S: Schüttgut

## Patentansprüche

1. Gurtrollenreifen (1) für eine Gurtbandrolle (2,31,32,33) eines Gurtbandfördersystems (3) aufweisend
• einen Reifengrundkörper (10), der auf einem um eine Gurtrollendrehachse (A) rotierbaren Rollenkörper (20) fixierbar ist, und
• eine Vielzahl tangential voneinander beabstandeter Konturrippen (11) mit einer Rippenhöhe (1113) und mit von der Gurtrollendrehachse (A) distalen Rippenkanten (111),
wobei der Gurtrollenreifen bei einer Rotation um die Gurtrollendrehachse (A) mit den Rippenkanten (111) eine Außenkontur des Gurtrollenreifens (1) beschreibt, wobei
mindestens eine der Konturrippen (111) entlang der Gurtrollendrehachse (A) betrachtet eine axiale Ausdehnung aufweist, die kleiner ist als die doppelte Rippenhöhe (1113),
und/oder
entlang der Gurtrollendrehachse (A) betrachtet mindestens eine der Konturrippen (111) nach einer axialen Ausdehnung von weniger als der doppelten Rippenhöhe (1113) eine strukturelle Unterbrechung in Form eines sich zur Gurtrollendrehachse (A) hin erstreckenden Spaltes mit einer Spalttiefe von mindestens der Hälfte der im Bereich des Spaltes auftretenden Rippenhöhe (1113) aufweist,
**dadurch gekennzeichnet, dass**
der Reifengrundkörper (10) und die Konturrippen (11) als einstückiges Gussteil aus einem Polymermaterial mit einer Shore-Härte im Bereich von 25 A bis 55 D ausgebildet ist.

2. Gurtrollenreifen (1) gemäß Anspruch 1, **dadurch gekennzeichnet, dass** die Rippenkanten (111) zumindest entlang der Hälfte ihrer axialen Ausdehnung einen Abstand voneinander aufweisen, der mindestens das 0,5 bis 2,5fache der Rippenhöhe (1113) beträgt.

3. Gurtrollenreifen (1) gemäß Anspruch 1 oder 2, **dadurch gekennzeichnet, dass** entlang der Gurtrollendrehachse (A) betrachtet eine Mehrzahl der Konturrippen (11) mit ihren Rippenkanten (111) einen geschwungenen Verlauf aufweisen.

4. Gurtrollenreifen (1) gemäß einem der Ansprüche 1 bis 3, **dadurch gekennzeichnet, dass** sich die Rippenkanten (111) entlang der Gurtrollendrehachse (A) betrachtet in mindestens zwei unterschiedlich zueinander verlaufenden Rippenkantenabschnitten (1111,1112) erstrecken.

5. Gurtrollenreifen (1) gemäß einem der vorangehenden Ansprüche, **dadurch gekennzeichnet, dass** die Rippenkanten (111) derart ausgebildet sind, dass der Gurtrollenreifen bei einer Rotation um die Gurtrollendrehachse (A) mit den Rippenkanten (111) die Außenkontur in Form eines Zylinders beschreibt.

6. Gurtrollenreifen (1) gemäß einem der vorangehenden Ansprüche, **dadurch gekennzeichnet, dass** tangential benachbarte Rippenkanten (111) in der einen axialen Richtung betrachtet zumindest abschnittsweise aufeinander zu verlaufen und in der Gegenrichtung betrachtet zumindest abschnittsweise voneinander weg verlaufen.

7. Gurtrollenreifen (1) gemäß Anspruch 6, **dadurch gekennzeichnet, dass** in axialer Richtung betrachtet benachbarte Rippenkanten (111) abwechselnd aufeinander zu verlaufen und voneinander weg verlaufen.

8. Gurtbandrolle (2) mit einem um eine Gurtrollendrehachse (A) rotierbaren Rollenkörper (20), auf dem ein Gurtrollenreifen (1) oder in axialer Richtung entlang der Gurtrollendrehachse (A) benachbart eine Mehrzahl von Gurtrollenreifen (1) ausgebildet nach einem der vorangehenden Ansprüche fixiert ist.

9. Gurtbandrolle (2) gemäß Anspruch 8, **dadurch gekennzeichnet, dass** der rotierbare Rollenkörper (20) mit einer motorischen Antriebsvorrichtung (21) gekoppelt ist.

10. Verwendung einer Gurtbandrolle (2) gemäß einem der Ansprüche 8 oder 9, **dadurch gekennzeichnet, dass** die Gurtbandrolle (2) in einem Gurtbandfördersystem (3) als passiv von einem Gurtband (30) mitgedrehter Untergurtabstreifer (33) oder als aktiv entgegen einer Gurtbandlaufrichtung rotierend angetriebener Untergurtabstreifer (33) eingesetzt wird.
